## Europäisches Patentamt
## European Patent Office
## Office européen des brevets

(11) Publication number: **0 221 850 B1**

# EUROPEAN PATENT SPECIFICATION

(45) Date of publication of the patent specification: **04.07.90**

(51) Int. Cl.⁵: **A23G 3/30**

(21) Application number: **86810484.5**

(22) Date of filing: **28.10.86**

(54) **Flavored tableted chewing gum.**

(30) Priority: **04.11.85 US 794818**

(43) Date of publication of application:
**13.05.87 Bulletin 87/20**

(45) Publication of the grant of the patent:
**04.07.90 Bulletin 90/27**

(84) Designated Contracting States:
**BE CH DE ES FR GB GR LI SE**

(56) References cited:
**EP-A- 0 134 703**
**EP-A- 0 151 344**
**EP-A- 0 202 819**
**DD-A- 36 655**
**DE-A- 2 065 404**
**US-A- 2 290 120**
**US-A- 3 857 964**
**US-A- 3 930 026**
**US-A- 4 065 578**
**US-A- 4 065 579**
**US-A- 4 259 355**
**US-A- 4 301 178**
**US-A- 4 401 456**

(73) Proprietor: **WARNER-LAMBERT COMPANY, 201 Tabor Road, Morris Plains New Jersey 07950(US)**

(72) Inventor: **Yang, Robert K., 12 Roc Etam Road, Randolph New Jersey 07869(US)**

(74) Representative: **Jones, Michael Raymond et al, HASELTINE LAKE & CO. Hazlitt House 28 Southampton Buildings Chancery Lane, London WC2A 1AT(GB)**

ACTORUM AG

## Description

This invention is concerned with a tableted chewing gum containing one or more active ingredients including flavorants which are entrapped or encapsulated in a delivery system and a method for preparing a tableted chewing gum using said entrapped or encapsulated ingredients. This invention is also concerned with a tableted chewing gum which provides a clearly recognizable flavor release of two or more different flavors.

Conventional chewing gum compositions are difficult to form into chewing gum tablets because of their moisture content. Traditional chewing gum compositions contain about 2% to about 8% by weight of water. As a consequence, attempts to grind the chewing gum compositions using readily available and standard techniques known in the art, have been unsuccessful. Generally the chewing gum will jam the grinding machine, sticking to blades, screens and other surfaces. In attempting to tablet chewing gum compositions having a moisture content greater than 2% by weight, various other problems occur, e.g. adherence to the punch press, compaction in the punch press hopper, poor flow in the feeder section and difficulties with compressibility. Attempts to make tableted chewing gums have therefore concentrated on alleviating the problem of moisture from the compositions prior to grinding and formation of granulation by either freezing the composition or by altering the composition itself.

U.S. Patent No. 4,000,321 discloses a chewing gum composition which is cooled to temperatures of -15 to -20°C for the purpose of comminuting it to a granular material. German Patent 2,808,160 utilizes a low temperature in order to provide granulation suitable for tableting. Similarly, U.S. Patents 4,161,544, 4,370,350 and European Patent Application published as 17-691 (1980) use a freezing temperature to facilitate comminution of chewing gum compositions to granular materials suitable for compaction into a tablet.

U.S. Patent No. 3 262 784 discloses a gum tablet which requires as much as 93.7% sweetener. U.S. Patent No. 4 405 647 discloses the comminution of chewing gum in a fluidized bed in the presence of a sweetener or inert constituent, e.g., a silicate.

U.S. Patent No. 4 065 579 discloses a non-tabletted chewing gum composition in which a sweetener, such as saccharin is separated from chalk in the gum base by an edible coating agent, which may be sodium alginate or carrageenan.

EP-A 0 151 344 discloses a chewing gum composition for use in a chewing gum tablet which comprises a grinding agent and a compression agent.

While the technique of freezing the chewing gum compositions is feasible, it requires equipment other than conventional tableting equipment and requires careful control of humidity during the tableting process focused on altering the conventional formulations. Methods to produce granulations having less than 2% by weight of moisture by adding other constituents change the taste and texture characteristics of the resulting gum and are, therefore undesirable.

It is also well known that with most flavored chewing gum compositions, the perception of flavor drops sharply after a short initial period of chewing. It is also known that large amounts of flavor incorporated into chewing gums are retained within the bolus and are never released during mastication. The bolus, primarily comprised of elastomers, resins and waxes, can entrap as much as 90% of the flavor. The remainder of the flavor which is available for release is generally physically associated with the water soluble chewing gum components, e.g., carbohydrates (particularly sweeteners), softeners and the like. To compensate for the unavailable flavor·lost to the bolus and to obtain a desired level of flavor intensity it is sometimes necessary to add higher amounts than normal of sweetener to the chewing gum. This has not resulted in acceptable flavoring, particularly in mint gums, because of harsh notes and bitterness which became apparent at higher levels. Additionally, excess amounts of flavoring ingredients tend to soften and plasticize the gum base, thereby affecting the chew characteristics.

The present invention, on the other hand, provides a tableted chewing gum containing 2% to 5% water and a method of producing such tableted gum containing at least one encapsulated active ingredient without the need for processing the gum composition at temperatures below the freezing point of water prior to compression into tablets and without the need for adding excessive amounts of sweetener or inert fillers. The invention also provides a tableted chewing gum containing two or more encapsulated flavorants and which delivers such flavors sequentially on chewing with a high level of flavor intensity.

Briefly, the invention is based on the discovery that very low temperatures, i.e. below the freezing point of water, for the granulation of finished gums suitable for tableting are not needed if plasticization of the gum base by oleophilic ingredients such as flavor oils is eliminated.

Such elimination of plasticization is accomplished by employing a delivery system for active ingredients with the gum base. The inventive composition and process provides a unique means of preventing the loss of flavor or other active ingredient to the gum base. Up to eighty percent or more of the flavor content becomes available for release due to the entrapment of flavor in a novel delivery system. The flavor intensity of the vehicle containing the delivery system, e.g., chewing gum, is greatly enhanced due to the significantly higher amounts of flavor released. About six to eight times as much flavor than the prior art chewing gum compositions can be released during chewing, thereby allowing for smaller total quantities of flavor to be used in the composition. Additionally, the prolongation of flavor and enhancement of sweetness is also significantly more pronounced than the prior art compositions. The problems of the prior art cited above are thus avoided, creating a chewing gum composition with long-lasting, uniform flavor levels.

The invention also employs flavorants which are encapsulated in hydrophilic matrices and in which

the amounts of flavorant are relatively low while still delivering the desired flavor intensity. An example of such an encapsulated flavorant is spray dried coffee which, although based on water soluble materials, holds its flavor tightly and does not plasticize the gum base.

By employing such encapsulated flavorants together in granulations for tableting, a gum granulation is produced above the freezing point of water which does not plasticize the gum base and which can be readily formed into tablets. Upon chewing, the gum provides sequential and discrete release of flavor with a high level of intensity. The so-formed tablet is stable for about eight to nine months at room temperature.

According to the present invention there is provided a tabletted chewing gum composition comprising a compressed granular mixture of:

(a) a chewing gum base; and
(b) a delivery system comprising:
(i) an unsolubilized active ingredient selected from flavouring agents, drugs, colouring agents, sweetening agents, perfumes, bulking agents and mixtures thereof; and
(ii) a cross-linked multivalent cation alginate or multivalent cation carrageenanate matrix entrapping the unsolubilized active ingredient.

The tableted gum of this invention may contain a flavorant which is encapsulated in a material which prevents migration of the flavor oil into the gum base of a tabletted chewing gum composition.

Flavorants and other active ingredients are encapsulated, according to the present invention, in a delivery system including a matrix material, in which the flavor is held tightly and which has no hydrophobic properties. At the same time, the matrix material is not so hydrophilic that it will react with the small amount of water normally found in conventional chewing gums. In essence, the matrix must be capable of swelling when hydrated. More particularly, the instant invention employs a delivery system comprising:

(a) an insolubilized active ingredient; and
(b) a cross-linked alginate or carrageenanate matrix entrapping said insolubilized active ingredient.

The term "insolubilized" is meant to include supersaturated solutions. Thus, the active ingredient may include water-soluble as well as water-insoluble or hydrophobic and hydrophilic materials. For example, a supersaturated solution of water-soluble active ingredient will have particles of the active ingredient dispersed in the saturated solution. Thus, it is preferable for the invention that the active ingredient and a monovalent aqueous hydrocolloid solution be capable of cooperating to form a dispersion. For purposes of this invention, "dispersion" can mean a liquid, solid or gaseous dispersion.

The invention uses the unique properties of the algins and carrageenans to entrap the flavorant. Certain hydrocolloids, such as monovalent alginates and carrageenan salts are capable of undergoing ion substitutions with multivalent salts. Thus, multivalent cations such as calcium or magnesium can be substituted for sodium or potassium ions by combining the multivalent cations with the monovalent alginates and carrageenans. While it is preferred that both mono- and multivalent cations be in solution prior to combining them, it is also useful to add the multivalent cation directly to an aqueous solution of the monovalent hydrocolloid. For example, a multivalent cation salt or hydroxy compound, such as calcium chloride or calcium carbonate, can be added in solid form to the monovalent solution. During the cation substitution, the physical phase as well as the properties of the system changes. As more monovalent cations are replaced by multivalent cations, the solution changes to a gel-like phase. Once the ion substitution is substantially complete, the gel becomes a water insoluble and irreversible precipitate. While cross-linking is preferably due to the exchange of ions, it is also accomplished by the manipulation of pH. Thus, the addition of acid will also initiate cross-linking.

More particularly, the insolubilized active ingredient is suspended in an aqueous solution of a monovalent cation salt of an algin and/or carrageenan hydrocolloid. To this solution is added a precipitate initiating material, e.g. a multivalent cation, multivalent cation-containing compound, or an acid.

Examples of useful multivalent cations include aluminum, calcium, iron, magnesium, manganese, copper, zinc and the like and mixtures thereof. The cations are ordinarily part of a compound and preferably a salt or hydroxy compound. The addition of the multivalent cation to the dispersion results in the exchange of multivalent for monovalent cations within the hydrocolloid complex and a cross-linked matrix manifested by an insoluble precipitate is formed. It is during the formation of this precipitate that the flavorant becomes entrapped within the matrix. Examples of useful precipitate initiating acids include inorganic as well as organic acids. Inorganic acids are preferred and may be selected from numerous food grade compounds. Hydrochloric, nitric, sulfuric and phosphoric are preferred, although numerous others are contemplated.

The matrix of the composite is not soluble in hydrophobic vehicles such as gum base and hence prevents migration and subsequent entrapment and plasticization of the active ingredient, e.g. flavor oil in the gum bolus. Rather, the composite matrix is substantially impermeable to water insoluble materials. Thus, the matrix structure prevents migration of the active ingredient into the gum base as well as preventing gum base materials from penetrating into the active ingredient.

Those hydrocolloid materials useful in forming the composite matrix must be capable of swelling when hydrated and change from a solution to a gel to a precipitate during the chemical exchange of the bivalent ion for monovalent ion. Among those useful materials are monovalent salts of algins and carrageenans. Algins are long linear copolymers of d-mannuronic acid or L-guluronic acid, having molecular weights ranging from about 4,000 to about 180,000. The carrageenans are derived from seaweed. The sodium, potassium and lithium salts of the algins and the carrageenans are water soluble and are therefore useful. Other salts are contemplated. These monovalent cations are readily displaced by multivalent cations such as aluminum, iron, calcium, magnesium, manganese, copper and zinc and the like, which in turn react with carboxylic acid groups of the hydrocolloid to form a crosslinked matrix. While the aforementioned multivalent ions are all useful, the preferred ions are bivalent, and the preferred bivalent cation is calcium. The multivalent cations are generally added to the monovalent hydrocolloid solution in the salt form. For example, calcium chloride is the preferred multivalent cation material. However, other compounds containing multivalent cations are useful; for example, hydroxy compounds such as calcium carbonate, magnesium carbonate and the like. The initial stage of crosslinking manifests itself in the formation of a gel or gel-like material. As additional monovalent ions are replaced, cross-linking continues until an insoluble precipitate results.

As previously mentioned, while the multivalent cation compound may be added in particulate form to the monovalent cation/insolubilized active dispersion, it is preferably added as an aqueous solution. In preparing the solution of the water soluble hydrocolloid monovalent salt, the hydrocolloid comprises about 1% to about 5% and preferably about 2% to about 4% by weight of the solution. The weight ratio of the hydrocolloid matrix to insolubilized active ingredient is about 5:1 to about 1:2 and preferably about 2:1 to about 1:1. If the multivalent cation is to be added in aqueous solution, the concentration ranges from about 1% to about 10% by weight and preferably about 2% to about 8%.

In preparing the encapsulated insolubilized active ingredient an aqueous suspension of a monovalent cation alginate or carrageenan salt and insolubilized active ingredient is first formed. The aqueous suspension is combined with a precipitate initiating material to form a precipitate and then a precipitated product is recovered and dried to form the encapsulated product.

As previously stated, the preferred monovalent hydrocolloid salts are the water-soluble sodium, potassium and lithium salts of alginates and carrageenans. Sodium alginate is the preferred monovalent salt. It is preferred that the solution be cooled before addition of the flavorant, in order to avoid any volatization. Temperatures ranging from about 0°C to about 20°C, and preferably about 2°C to about 8°C may be used, providing however, that the solution does not crystallize or freeze. In one embodiment of the process, high shear mixing is used to uniformly disperse the active ingredient within the solution. Caution must be used to chose the correct speed and mixing time in order to achieve uniformity. Mixing for too long a time may reduce the viscosity by shearing the monovalent hydrocolloid salt to a point where its effectiveness as a means of entrapping the flavor oil during ion exchange is substantially reduced. On the other hand, high shear mixing for too short a time results in large droplets or particles of active ingredient which are difficult to entrap in the interstices of the matrix. The particle or droplet size of the active ingredient should be a maximum of about 10 μm, although the range below that may vary. For best results, the average particle size of the dispersed particles or droplets should be about 1 to about 5 μm.

Thus, in the above embodiment it is apparent that a delicate balance of mixing time and speed must be maintained for proper uniformity of dispersion. Additionally, if too high a shear speed is used for too long, localized heat buildup in the dispersion may cause volatilization of the active ingredient. To protect against localized heat buildup, the temperature of the dispersion should be maintained at about 0° to about 20°C. Generally, about four to ten minutes is a proper shearing time and the mixing speed may vary from about 30 to about 7,500 RPM on a standard Eppenbach homo-head mixer. Other suitable mixing equipment such as colloid millers, etc., can also be used.

The multivalent cation compound must be capable of ionizing in water. Nonlimiting examples of useful compounds are the chloride, sulfate, acetate and carboxylate salts of calcium, magnesium, copper, zinc, manganese, aluminum, iron and the like. Other useful multivalent compounds such as hydroxy compounds, carbonates and the like, are contemplated, as well as mixtures thereof.

As an alternative for preparing the encapsulated flavor oil, the multivalent cation solution can be added to the monovalent cation/insolubilized active dispersion by spraying the one into the other. Preferably the multivalent cation, for example, calcium chloride solution, is sprayed from a nozzle in the form of a fine spray into the dispersion. The spray naturally contains the flavor oil within. Once the fine spray contacts the dispersion, a precipitate rapidly forms entrapping the flavor oil within the thus formed matrix. The advantage to this embodiment is that mixing of the final mixture is not necessary, since the spray droplet size can be controlled within the preferred range to ensure sufficient intimate contact and cation exchange.

The multivalent cation may be added to the dispersion in stoichiometric amounts relative to the concentration of monovalent ion present, but preferably excess multivalent cations are added to insure substantially complete replacement of the monovalent cation with the multivalent cation in the hydrocolloid structure. The addition of the multivalent cation should be carried out at a temperature which is lower than the point at which the active ingredient will begin to volatize. Preferably, the addition is carried out at temperatures of about 1° to about 20°C and most preferably about 1° to about 5°C. The addition should be carried out in a relatively rapid continuous manner using the shortest shearing time possible to get as much flavor exposed to and entrapped by the matrix which forms in situ. Unless the addition of the multivalent cation is by spray or fine droplet, mixing is necessary for best results, in order to homogenize the dispersion and allow the multivalent cations to come in contact with and replace the monovalent cations.

The formation of the hydrocolloid matrix is manifested by the irreversible, insoluble precipitate which is formed. The precipitate is than filtered off, washed and dried. Drying of the matrix may be carried out by conventional methods such as air drying at room temperature or freeze drying. Drying at temperatures above the volatization point of the active ingredient is not recommended. Generally, drying should be carried out at temperatures of about 25°C or less. A preferred drying method is to use a combination of freeze drying followed by room temperature air drying. Once dried, the matrix is brittle and easily ground into particles of various sizes. Particle size may vary with a particular application and can be easily determined by routine experimentation. As previously mentioned, if the alternative spraying process is used, grinding may be unnecessary since the particles comprising the encapsulated flavorant may already be within a suitable size range. In chewing gum compositions, for example, the encapsulated flavorant may have an average size of about 30 to 150 U.S. standard mesh (about 590 to about 105 μm) and preferably about 40 to about 60 mesh (about 420 to about 250 μm).

As previously stated, suitable active ingredients may be selected from a wide range of materials. The only requirement is that they be capable of being in the insolubilized state when placed in the monovalent cation hydrocolloid solution. In other words, they must be ultimately capable of being dispersed within the solution. Thus, substantially insoluble or hydrophobic materials as well as substantially soluble and hydrophilic materials are operable. In the case of hydrophilic materials, a supersaturated solution is contemplated whereby sufficient excess active ingredient is present in the monovalent cation hydrocolloid salt solution such that a dispersion results. Acid saccharin is an example of a poorly water-soluble material which works well in the instant invention. The aluminum salt of saccharin is another such material. By maintaining a low temperature of the solution, a supersaturated solution using these materials is created. The active ingredient which does not become solubilized remains dispersed.

The flavoring agents useful as insolubilized active ingredients which can be encapsulated for use in this invention may be derived from synthetic flavor oils and/or oils derived from plants, leaves, flowers, fruits, and so forth, and combinations thereof. Representative flavor oils include peppermint oil, spearmint oil, cinnamon oil, and oil of wintergreen (methyl salicylate). Also useful are natural or synthetic fruit flavors, such as citrus oils including lemon, orange, grape, lime, and grapefruit, and fruit essences including apple, strawberry, cherry, pineapple and so forth and extracts such as kola extract, mixtures of these are also contemplated.

Examples of drugs which may be useful as the active ingredient include: mineral supplements, analgesics, antipyretics, antiarrhythmics, ion exchange resins, appetite supressants, vitamins, anti-inflammatory substances, coronary dilators, cerebral dilators, peripheral vasodilators, anti-infectives, psychotropics, antimanics, stimulants, antihistamines, laxatives, decongestants, gastro-intestinal sedatives, antidiarrheal preparations, anti-anginal drugs, vasodilators, antiarrythmics, anti-hypertensive drugs, vasoconstrictors and migraine treatments, antibiotics, tranquilizers, antipsychotics, antitumor drugs, anticoagulants and antithrombotic drugs, hypnotics, sedatives, antiemetics, anti-nauseants, anticonvulsants, neuromuscular drugs, hyper- and hypoglycaemic agents, thyroid and antithyroid preparations, diuretics, antispasmodics, uterine relaxants, mineral and nutritional additives, antiobesity drugs, anabolic drugs, erythropoietic drugs, antiasthmatics, expectorants, cough suppressants, mucolytics, anti-uricemic drugs and mixtures thereof.

Useful coloring agents and fragrances may be selected from any of these suitable for use in food, drug and cosmetic applications, providing they are capable of being dispersed in the manner previously recited.

Sweetening agents are also useful as active ingredients. Due to the high water solubility of most of these materials, a supersaturated solution will ordinarily be necessary in order to obtain the requisite dispersion. As previously mentioned, however, poorly soluble sweeteners, such as the acid saccharin, work particularly well. Any of the sweeteners mentioned in connection with the vehicles later to be described may be used. Aspartame may also be encapsulated.

The pressed tablet into which the encapsulated flavoring compositions are incorporated are preferably prepared by dry granulation and most preferably the direct compression method. Each of these methods involve conventional procedures well known to the ordinary skilled artisan. Dry granulation generally involves mixing of powders, compression into large hard tablets to make slugs, screening of slugs, mixing with lubricants and disintegrating agents and finally tablet compression. In the direct compression method, the milled ingredients are mixed and then merely tableted by compression. The pressed tablet ingredients used in the invention are selected from those materials routinely used. In particular such ingredients primarily include sweeteners, lubricants, and optional coloring agents, binders and fillers.

The gum base may be any water-soluble gum base well known in the art. Illustrative examples of suitable polymers in gum bases include both natural and synthetic elastomers and rubbers. For example, those polymers which are suitable in gum bases, include, without limitation, substances of vegetable origin such as chicle, jelutong, gutta percha and crown gum. Synthetic elastomers such as butadiene-styrene copolymers, isobutylene-isoprene copolymers, polyethylene, polyisobutylene and polyvinylacetate and mixtures thereof, are particularly useful.

The gum base composition may contain elastomer solvents or plasticizers to aid in softening the rubber component. Such elastomer solvents may comprise methyl, glycerol or pentaerythritol esters of rosins and gums or modified rosins and gums, such as hydrogenated, dimerized or polymerized rosins and gums or mixtures thereof. Examples of elastomer solvents suitable for use herein include the pentaerythritol ester of partially hydrogenated wood rosin, pentaerythritol ester of wood rosin, glycerol ester of wood rosin, glycerol ester of partially dimerized rosin, glycerol ester of polymerized rosin, glycerol ester of tall oil rosin, glycerol ester of wood rosin and partially hydrogenated wood rosin and partially hydrogenated methyl ester of rosin, such as polymers of -pinene or -pinene; terpene resins including polyterpene and mixtures thereof. The solvent may be employed in an amount ranging from about 10% to about 75% and preferably about 45% to about 70% by weight to the gum base.

A variety of traditional ingredients such as plasticizers or softeners such as lanolin, stearic acid, sodium stearate, potassium stearate, glyceryl triacetate, glycerine and the like for example, natural waxes, petroleum waxes, such as polyurethane waxes, paraffin waxes and microcrystalline waxes may also be incorporated into the gum base to obtain a variety of desirable textures and consistency properties. These individual additional materials are generally employed in amounts of up to about 30% by weight and preferably in amounts of from 3% to about 20% by weight of the final gum base composition.

The gum compositions generally contain a major portion of a sweetening agent. These sweetening agents are independent from the excipients and sweetening agents used in the delivery system described above.

Sweetening agents may be selected from a wide range of materials such as water-soluble sweetening agents, water-soluble artificial sweeteners, and dipeptide based sweeteners, including mixtures thereof. Without being limited to particular sweeteners, representative illustrations encompass:

A. Water-soluble sweetening agents such as monosaccharides, disaccharides and polysaccharides such as xylose, ribose, glucose, mannose, galactose, lactose, fructose, dextrose, sucrose, sugar, maltose, partially hydrolyzed starch, or corn syrup solids and sugar alcohols such as sorbitol, xylitol, mannitol and mixtures thereof.

B. Water-soluble artificial sweeteners such as the soluble saccharin salts, i.e. sodium or calcium saccharin salts, cyclamate salts and the like, and the free acid form of saccharin.

C. Dipeptide based sweeteners including L-aspartyl-L-phenylalanine methyl ester and materials described in U.S. Patent No. 3,492, 131 and the like.

In general, the amount of sweetener will vary with the described amount of sweetener selected. This amount will normally be about 0.001% to about 98% by weight when using an easily extractable sweetener. The water-soluble sweeteners described in category A are preferably used in amounts of about 60% to about 98% by weight of the final tablet composition. In contrast, the artificial sweeteners described in categories B and C are used in amounts of about 0.01% to about 5.05 and most preferably about 0.05% to about 0.25% by weight of the final tablet composition. These amounts are necessary to achieve a desired level of sweetness independent from the flavor achieved from the flavor oil.

Lubricants are used in the tablet formulations in order to ease the ejection of the tablet from the die, to prevent sticking of the tablets to the punches and to limit wear on dies and punches. Lubricants may be selected from a wide range of materials such as magnesium stearate, calcium stearate, zinc stearate, hydrogenated vegetable oils, talc, light mineral oils, sodium benzoate, sodium lauryl sulfate, magnesium lauryl sulfate and mixtures thereof. Magnesium stearate is the preferred lubricant in view of its ready availability and efficient lubrication properties.

The lubricants should be in as fine a state of subdivision as possible since the smaller the particle size the greater the efficiency in the granulation. Preferred sized are those that pass through an 177 to 149 μm (80 or 100 mesh) screen and most preferred through a 74 μm (200 mesh) screen before use. The amount of lubricant will vary broadly and is preferably from about 0.1% to about 5% by weight of the total composition.

Colorants should be selected from materials that are unaffected by higher temperatures and are considered optional ingredients in the tablet formulations. Such materials when used are employed in amounts of 0 to about 0.3% by weight of the total formulation.

The encapsulated flavorant generally comprises from about 1% to 10% by weight of the total composition and preferably from about 2% to 8%. The gum base comprises from about 20% to 30% by weight of the composition.

Non-encapsulated agents, e.g. flavouring agents, in addition to those incorporated in the delivery system may be directly added to the chewing gum compositions of the instant invention. These flavoring agents have been previously discussed and may be chosen from synthetic flavoring liquids and/or liquids derived from plants, leaves, flowers, fruits ant so forth, and combinations thereof. Representative flavoring liquids include: spearmint oil, cinnamon oil, oil of wintergreen (methylsalicylate) and peppermint oils. Also useful are artificial, natural or synthetic fruit flavors such as citrus oil including lemon, orange, grape, lime and grapefruit and fruit essences including apple, strawberry, cherry, pineapple and so forth. Powdered flavoring, beaded flavoring, spray dried flavoring and encapsulated flavoring may also be added. A chewing gum composition containing an alginate or carrageenanate encapsulated flavor oil can be prepared to which is directly added a non-encapsulated flavorant.

This invention also provides a flavored tableted chewing gum containing two or more encapsulated flavorants which release flavors on chewing sequentially and discretely. Two or more alginate or carrageenanate encapsulated flavorants may be employed for that purpose.

However, particularly preferred as second flavorant is a flavorant which is encapsulated in hydrophilic matrices and in which amounts of flavor oil are relatively low while still delivering the desired flavor intensity. An example of such a flavorant is spray dried instant coffee. The flavor therein is based on water soluble materials but is held tightly and has been found not to plasticize the gum base.

Moreover, tableted gums can be prepared according to the invention containing an encapsulated flavor oil and other encapsulated active ingredients such as drugs as previously discussed which ordinarily have a tendency to be excellent plasticizers for chewing gum bases. Thymol for example has the ability to plasticize chewing gum base.

The delivery system of this invention have excellent long term stability, i.e., more than 1 year at 37°C. The amount of active ingredient used in any given application will be purely a matter of preference of the user. The delivery system of this invention is particularly advantageous because the release of active ingredient, for example, flavor oil, is gradual over an extended period of time. Since hydration is necessary in order to release the active ingredient from the delivery system matrix, release of the active ingredient is delayed about 1 to about 6 minutes, generally about 2 to about 4 minutes once consumed or chewed. An initial burst of flavor can be obtained by adding auxilary active ingredients and excipients in conventional ways directly to the gum composition.

In preparing tableted chewing gums according to the invention, the dry, solid materials such as sweetener and encapsulated flavorants or other encapsulated ingredients are dry blended. The gum base is melted and combined with any other constituent used in the formulation and then added to the dry blend to form a gum. The resulting mixture is cooled to a temperature above the freezing point of water, e.g. between 5 and 10°C. The gum is then broken up into discrete particles and compressed into tablets. When incorporating two or more encapsulated flavorants into the gum granulation to be tableted, there results in a controlled, sequential release of flavorants. For example, in the case of tableted gum according to the invention which includes spray dried instant coffee and alginate encapsulated peppermint oil for example, the gum, upon chewing, provides immediate release of the coffee flavor which is then followed some 2-3 minutes later by release of the peppermint oil. Such gum is stable for at least 8-9 months at room temperature.

Tableted gums can also be made according to the invention by blending two or more granulations prior to compression, at least one of which contains an alginate or carrageenanate encapsulated flavorant. Such blending may achieve stability of drugs and sweeteners. For example a gum granulation containing sorbitol and aspartame but no flavorant, can be blended with a second granulation containing an encapsulated flavorant. By blending the two granulations before compression it is possible to provide a stable aspartame containing flavored chewing gum. Depending on the needs of the formulation, additional granulations can be prepared and blended to yield a multi-vitamin gum tablet or other gum which delivers a multiplicity of colors, flavors, drugs, and other desirable ingredients simultaneously or sequentially.

In order to more completely describe the present invention, the following non-limiting Examples are described.

Example 1

This Example demonstrates the preparation of a flavored tableted chewing gum composition incorporating two flavorants and demonstrates the sequential release of those flavorants.

Forty (40.00) grams of a sodium alginate solution (having a viscosity of $115 \times 10^{-3}$ Pa • s (115 centipoise) when measured in a 1% by weight aqueous solution at 75°C) was dissolved in 1,600 ml of distilled water and chilled to 5°C. Forty (40.00) grams of peppermint oil was than added to the solution with high shear mixing to form an oil-in-water dispersion. Using a Petroff-Hauses Chamber the oil droplets were determined to be within the 1 to 5 μm range.

With continued high shear mixing about 1,600 ml of a 2% by weight calcium chloride solution was added to the alginate solution. Mixing was continued for about 5 to about 10 minutes. As the displacement of the sodium ion by calcium ions occurred, the solution phase changed first to a gel-like consistency and then to a precipitate. The precipitate represented a cross-linked matrix resulting from ion exchange.

The cross-linked matrix was washed to remove excess calcium chloride solution and frozen at –15°C overnight. After thawing, the calcium alginate matrix separated from the entrapped water. The matrix was filtered and air dried. The dried mass was comminuted, using a pulverizer, to a particle size range of 420 to 250 μm (40 to 60 mesh, U.S. standard size).

A chemical assay of the powdered delivery system product showed that it contained 44% peppermint oil by weight based on the total product weight.

Thereafter 53.04 gms of sugar, 2.4 g of a spray dried instant coffee, and 2.1 g of the alginate encapsulated peppermint oil as prepared above were blended dry and added to a gum mixer. About 21.1 g of a butyl rubber gum base was melted and blended with 0.36 g of aluminum saccharinate and 1 g of vegetable oil. This blend was added to the gum mixer. After 3 minutes cf mixing the mixture was transferred to a beaker and cooled to about 5°C. By using a waring blender, the gum was broken up onto discrete particles which were then compressed into 3 g tablets using an handpresser. Upon chewing, the gum provided immediate release of the coffee flavor which was then followed two to three minutes later by release of the peppermint oil flavor.

Example 2

In this Example an alginate encapsulated peppermint oil was prepared as above using the procedure of Example 1. Similarly an alginate encapsulated aspartame was prepared by the same procedure. About 262.5 g of sugar 6X, 12.08 g of spray dried instant coffee, 7.3 g of alginate encapsulated peppermint oil, 4.6 g of encapsulated aspartame and 2.0 g of coffee flavor (International Flavors & Fragrances) were preblended in a 600 ml. beaker and transferred to an unheated sigma blade gum mixer. Styrene butadiene rubber gum base, 105.6 g, was melted and to the melt was added 6.0 g of triacetin with thorough mixing. After cooling to 60°C, this melt was added to the mixer and blended for 3 minutes. After storage in a refrigerator, the mass was granulated and processed as described for Example 1. The sequential release of flavors from this product is similar to that of Example 1.

Example 3

Example 1 was repeated using 30 grams of synthetic spearmint oil instead of peppermint oil. A chemical assay showed a 46% spearmint oil concentration (as carvone) based on the total product weight. The product had the same stability exhibited by the peppermint oil/alginate encapsulated material of Example 1 and can be employed in a similar tableted gum to give the same sequential release of flavors.

Example 4

About 17.0 grams of sodium alginate was added to 574 grams of cold water (0° to 5°C). To this hydrocolloid solution was added fine powdered thymol as the active material. Xanthan gum (6 grams) was added as a filler to enhance and soften the final texture of the precipitate. The dispersion was mixed at high shear, maintaining cold temperatures. About 600 grams of 0.2N HCl was added to the precipitate initiating material. The resultant precipitate rapidly formed entrapping the thymol within the matrix. The precipitate was filtered, washed and freeze dried. The resultant product was then assayed for actual vs. theoretical amounts of entrapped active ingredients. The results are shown below:

|  | Theoretical | Actual |
| --- | --- | --- |
| Thymol | 29.9% | 27.5% |

The alginate encapsulated thymol can be substituted for the instant spray dried coffee of Example 1 to provide tableted gum which does not plasticize the gum base.

**Claims for the Contracting States: BE, FR, DE, GR, SE, CH, GB**

1. A tabletted chewing gum composition comprising a compressed granular mixture of:
   (a) a chewing gum base; and
   (b) a delivery system comprising
      (i) an insolubilized active ingredient selected from flavouring agents, drugs, colouring agents, sweetening agents, perfumes, bulking agents and mixtures thereof; and
      (ii) a cross-linked multivalent cation alginate or multivalent cation carrageenanate matrix entrapping said insolubilized active ingredient.

2. A composition according to claim 1 which further includes a sweetener incorporated independently of the delivery system.

3. A composition according to claim 1 or 2, wherein the gum base is comprised of polymers selected from chicle, jelutong, gutta percha, crown gum, butadiene-styrene copolymers, isobutylene-isoprene copolymers, polyethylene, polyisobutylene, polyvinyl acetate and mixtures thereof.

4. A composition according to claim 1, 2 or 3, wherein the insolubilized active ingredient is a flavour oil selected from peppermint oil, spearmint oil, cinnamon oil, oil of wintergreen, citrus oils, fruit essences, extracts and mixtures thereof.

5. A tableted chewing gum composition comprising a compressed granular mixture of:
   (a) a chewing gum base;
   (b) a first alginate or carrageenanate encapsulated flavourant; and
   (c) a second ingredient encapsulated in a hydrophilic matrix.

6. A composition according to claim 5 which further includes a sweetener incorporated independently of the alginate or carrageenanate encapsulated flavourant.

7. A composition according to claim 5 or 6, wherein the chewing gum base is comprised of polymers selected from chicle, jelutong, gutta percha, crown gum, butadiene-styrene copolymers, isobutylene-isoprene copolymers, polyethylene, polyisobutylene, polyvinyl acetate and mixtures thereof.

8. A composition according to claim 5, 6 or 7, wherein the first flavourant is a flavour oil selected from peppermint oil, spearmint oil, cinnamon oil, oil of wintergreen, citrus oils, fruit essences, extracts and mixtures thereof.

9. A composition according to any one of claims 5 to 8, wherein the second ingredient is a second encapsulated flavourant and said tableted chewing gum sequentially releases said flavourants.

10. A composition according to claim 9, wherein the second flavourant is spray dried coffee.

11. A composition according to claim 5, wherein the second ingredient is a drug.

12. A composition according to claim 11, wherein the drug is thymol.

13. A process for making a tableted chewing gum comprising:
   (a) providing a chewing gum composition comprising a gum base having a water content in the range of 2% to 5% by weight;
   (b) adding to the gum base an encapsulated flavour oil while maintaining the temperature of the overall mixture above the freezing point of water, the encapsulant being characterized in that it prevents the flavour oil from solubilizing or plasticizing the gum base;
   (c) allowing the mixture of solidify;
   (d) granulating the solidified mixture; and
   (e) compressing the resultant granulation into a chewing gum tablet.

14. A process according to claim 13, wherein the chewing gum composition provided in step a includes a sweetener.

15. A process according to claim 13 or 14, wherein the gum base is comprised of polymers selected from chicle, jelutong, gutta percha, crown gum, butadiene-styrene copolymers, isobutylene-isoprene copolymers, polyethylene, polyisobutylene, polyvinyl acetate and mixtures thereof.

16. A process according to claim 13, 14 or 15, wherein the flavour oil is selected from peppermint oil, spearmint oil, cinnamon oil, oil of wintergreen, citrus oils, fruit essences, extracts and mixtures thereof.

17. A process for producing a chewing gum tablet comprising:
(a) forming a mixture comprising a gum base having a water content in the range of 2% to 5% by weight, a first alginate or carragenanate encapsulated flavourant and a second ingredient encapsulated in a hydrophilic matrix at a temperature above the freezing point of water;
(b) allowing the mixture to solidify;
(c) granulating the solidified mixture; and
(d) compressing the resultant granulation into a chewing gum tablet.

18. A process according to any one of claims 13 to 16, wherein the encapsulant is a cross-linked multivalent cation alginate or multivalent cation carrageenanate matrix.

**Claims for the Contracting State: ES**

1. A process for the preparation of a tabletted chewing gum which comprises:
(a) providing a gum base;
(b) adding to the gum base a delivery system comprising:
(i) an insolubilized active ingredient selected from flavouring agents, drugs, colouring agents, sweetening agents, perfumes, bulking agents and mixtures thereof; and
(ii) an encapsulant,
while maintaining the temperature of the overall mixture above the freezing point of water, the encapsulant being characterised in that it prevents the active ingredient from solubilizing or plasticising the gum base;
(c) allowing the mixture to solidify;
(d) granulating the solidified mixture; and
(e) compressing the resultant granulation into a chewing gum tablet.

2. A process according to claim 1, wherein the gum base includes a sweetener.

3. A process according to claim 1 or 2, wherein the gum base is comprised of polymers selected from chicle, jelutong, gutta percha, crown gum, butadiene-styrene copolymers, isobutylene-isoprene copolymers, polyethylene, polyisobutylene, polyvinyl, acetate and mixtures thereof.

4. A process according to claim 1, 2 or 3, wherein the gum base has a water content in the range of 2% to 5% by weight.

5. A process according to any preceding claim, wherein the encapsulant is a cross-linked multivalent cation alginate or multivalent cation carrageenanate matrix.

6. A process according to any preceding claim, wherein the active ingredient is a flavour selected from peppermint oil, spearmint oil, cinnamon oil, oil of wintergreen, citrus oils, fruit essences, extracts and mixtures thereof.

7. A process for the preparation of a chewing gum tablet comprising:
(a) forming a mixture comprising a gum base, a first alginate or carrageenanate encapsulated flavourand and a second ingredient encapsulated in a hydrophilic matrix, at a temperature above the freezing point of water;
(b) allowing the mixture to solidify;
(c) granulating the solidified mixture; and
(d) compressing the resultant granulation into a chewing gum tablet.

8. A process according to claim 7, wherein the second ingredient is a flavouring agent and the tabletted chewing gum sequentially releases the flavourants.

9. A process according to claim 8, wherein the second flavouring agent is spray dried coffee.

10. A process according to claim 7, wherein the second ingredient is a drug.

11. A process according to claim 10, wherein the drug is thymol.

**Patentansprüche für die Vertragsstaaten: BE, FR, DE, GR, SE, CH, GB**

1. Kaugummimischung in Tablettenform bestehend aus einem komprimierten Granulatgemisch aus:
(a) einer Kaugummibasis und
(b) einem Abgabesystem bestehend aus
(i) einem unlöslich gemachten, aktiven Zutatenbestandteil, ausgewählt aus Geschmackstoffen, Arzneimitteln, Süßstoffen, Geruchsstoffen, Füllstoffen und deren Gemischen; und
(ii) einem vernetzten, polyvalenten Kationenalginat oder einer polyvalenten Kationen-Karrageenanat-Einbettungsmasse, welche besagten, unlöslich gemachten, aktiven Zutatenbestandteil umhüllt.

2. Eine Mischung nach Patentanspruch 1, in der außerdem ein Süßstoff enthalten ist, der darin unabhängig vom Abgabesystem zugegen ist.

3. Eine Mischung nach Patentanspruch 1 oder 2, worin die Gummibasis aus Polymeren besteht, ausgewählt aus Chicle, Jelutong, Guttapercha, Crowngummi, Butadien-Styrol-Kopolymeren, Isobutyl-Isopren-Kopolymeren, Polyäthylen, Polyisobutylen, Polyvinylazetat und deren Gemischen.

4. Eine Mischung nach Patentanspruch 1, 2 oder 3, worin der unlöslich gemachte, aktive Zutatenbestandteil ein Geschmacksöl ist, das ausgewählt wird aus Pfefferminzöl, Öl der Grünen Minze, Zimtöl, Wintergrünöl, Zitrusölen, Fruchtessenzen, Extrakten und deren Gemischen.

5. Kaugummimischung in Tablettenform bestehend aus einem komprimierten Granulatgemisch aus:
(a) einer Kaugummibasis und
(b) einem ersten Alginat oder karrageenanat-umhüllenden Geschmacksstoff; und
(c) einem zweiten Zutatenbestandteil, eingehüllt in eine hydrophile Einbettungsmasse.

6. Eine Mischung nach Patentanspruch 5, in der außerdem ein Süßstoff enthalten ist, der unabhängig vom Alginat oder karrageenanat-umhüllten Geschmacksstoff zugegen ist.

7. Eine Mischung nach Patentanspruch 5 oder 6, worin die Gummibasis aus Polymeren besteht, ausgewählt aus Chicle, Jelutong, Guttapercha, Crowngummi, Butadien-Styrol-Kopolymeren, Isobutyl-Isopren-Kopolymeren, Polyäthylen, Polyisobutylen, Polyvinylazetat und deren Gemischen.

8. Eine Mischung nach Patentanspruch 5, 6 oder 7, worin der erste Geschmacksstoff ein Geschmacksöl ist, das ausgewählt wird aus Pfefferminzöl, Öl der Grünen Minze, Zimtöl, Wintergrünöl, Zitrusölen, Fruchtessenzen, Extrakten und deren Gemischen.

9. Ein Gemisch nach einem der Patentansprüche 5 bis 8, worin der zweite Zutatenbestandteil ein zweiter, umhüllter Geschmacksstoff ist und die Kaugummimischung in Tablettenform besagte Geschmacksstoffe hintereinander freisetzt.

10. Eine Mischung nach Patentanspruch 9, worin der zweite Geschmacksstoff ein sprühgetrockneter Kaffee ist.

11. Eine Mischung nach Patentanspruch 5, worin der zweite Zutatenbestandteil ein Arzneimittel ist.

12. Eine Mischung nach Patentanspruch 11, worin das Arzneimittel Thymol ist.

13. Ein Verfahren zur Herstellung eines Kaugummis in Tablettenform, bestehend aus den Schritten
(a) Bereitstellung einer Kaugummimischung bestehend aus einer Gummibasis mit einem Wassergehalt im Bereich von 2 bis 5 Gewichtsprozenten;
(b) Zufügen eines umhüllten Geschmacksöles zur Gummibasis, wobei die Temperatur der Gesamtmischung über dem Gefrierpunkt des Wassers gehalten wird, und wobei das Einhüllmittel dadurch gekennzeichnet ist, daß es verhindert, daß das Geschmacksöl die Gummibasis löst oder plastifiziert;
(c) Verfestigenlassen der Mischung;
(d) Granulieren der verfestigten Mischung; und
(e) Komprimieren des sich ergebenden Granulats in den Kaugummi in Tablettenform.

14. Ein Verfahren nach Patentanspruch 13, worin die in Schritt (a) bereitgestellte Kaugummimischung einen Süßstoff enthält.

15. Ein Verfahren nach Patentanspruch 13 oder 14, worin die Gummibasis aus Polymeren besteht, ausgewählt aus Chicle, Jelutong, Guttapercha, Crowngummi, Butadien-Styrol-Kopolymeren, Isobutyl-Isopren-Kopolymeren, Polyäthylen, Polyisobutylen, Polyvinylazetat und deren Gemischen.

16. Ein Verfahren nach Patentanspruch 13, 14 oder 15, worin das Geschmacksöl ausgewählt wird aus Pfefferminzöl, Öl der Grünen Minze, Zimtöl, Wintergrünöl, Zitrusölen, Fruchtessenzen, Extrakten und deren Gemischen.

17. Ein Verfahren zur Herstellung eines Kaugummis in Tablettenform bestehend aus den Schritten:
(a) Bilden einer Mischung bestehend aus einer Gummibasis mit einem Wassergehalt im Bereich von 2 bis 5 Gewichtsprozenten, einem ersten Alginat oder karrageenanat-umhüllten Geschmacksstoff und einem zweiten Zutatenbestandteil, eingehüllt in eine hydrophile Einbettungsmasse bei einer über dem Gefrierpunkt des Wassers liegenden Temperatur;
(b) Verfestigenlassen der Mischung;
(c) Granulieren der verfestigten Mischung; und
(d) Komprimieren des sich ergebenden Granulats in den Kaugummi in Tablettenform.

18. Ein Verfahren nach einem der Ansprüche 13 bis 16, worin das Einhüllmittel ein vernetztes, polyvalentes Kationenalginat oder ein polyvalentes Kationen-Karrageenanat-Einbettungsmittel ist.

**Patentansprüche für den Vertragsstaat: ES**

1. Verfahren zur Herstellung eines Kaugummis in Tablettenform bestehend aus den Schritten:
(a) Bereitstellung einer Gummibasis;
(b) Zufügen eines Abgabesystems zur Gummibasis, wobei das Abgabesystem besteht aus:
(i) einem unlöslich gemachten, aktiven Zutatenbestandteil, ausgewählt aus Geschmacksstoffen, Arzneimitteln, Süßstoffen, Geruchsstoffen, Füllstoffen und deren Gemischen; und
(ii) einem Einhüllmittel,
wobei die Temperatur der Gesamtmischung über dem Gefrierpunkt des Wassers gehalten wird, und wobei das Einhüllmittel dadurch gekennzeichnet, ist, daß es verhindert, daß das Geschmacksöl die Gummibasis löst oder plastifiziert;
(c) Verfestigenlassen der Mischung;
(d) Granulieren der verfestigten Mischung; und
(e) Komprimieren des sich ergebenden Granulats in den Kaugummi in Tablettenform.

2. Ein Verfahren nach Patentanspruch 1, worin die Gummibasis einen Süßstoff enthält.

3. Ein Verfahren nach Patentanspruch 1 oder 2, worin die Gummibasis aus Polymeren besteht, ausgewählt aus Chicle, Jelutong, Guttapercha, Crowngummi, Butadien-Styrol-Kopolymeren, Isobutyl-Isopren-Kopolymeren, Polyäthylen, Polyisobutylen, Polyvinylazetat und deren Gemischen.

4. Ein Verfahren nach Patentanspruch 1, 2 oder 3, worin die Gummibasis einen Wassergehalt im Bereich von 2 bis 5 Gewichtsprozenten aufweist.

5. Ein Verfahren nach einem der vorhergehenden Ansprüche, worin das Einhüllmittel ein vernetztes, polyvalentes Kationenalginat oder ein polyvalentes Kationen-Karrageenanat-Einbettungsmittel ist.

6. Ein Verfahren nach einem der vorhergehenden Ansprüche, worin der aktive Zutatenbestandteil ausgewählt wird aus Pfefferminzöl, Öl der Grünen Minze, Zimtöl, Wintergrünöl, Zitrusölen, Fruchtessenzen, Extrakten und deren Gemischen.

7. Ein Verfahren zur Herstellung eines Kaugummis in Tablettenform, bestehend aus den Schritten
(a) Bilden einer Mischung, bestehend aus einem ersten Alginat oder karrageenanat-umhüllten Geschmacksstoff und einem zweiten Zutatenbestandteil, eingehüllt in eine hydrophile Einbettungsmasse bei einer über dem Gefrierpunkt des Wassers liegenden Temperatur;
(b) Verfestigenlassen der Mischung;

(c) Granulieren der verfestigten Mischung; und
(d) Komprimieren des sich ergebenden Granulats in den Kaugummi in Tablettenform.

8. Ein Verfahren nach Patentanspruch 7, worin der zweite Zutatenbestandteil ein zweiter, umhüllter Geschmacksstoff ist und die Kaugummimischung in Tablettenform besagte Geschmacksstoffe hintereinander freisetzt.

9. Ein Verfahren nach Patentanspruch 8, worin der zweite Geschmacksstoff ein sprühgetrockneter Kaffee ist.

10. Ein Verfahren nach Patentanspruch 7, worin der zweite Zutatenbestandteil ein Arzneimittel ist.

11. Ein Verfahren nach Patentanspruch 10, worin das Arzneimittel Thymol ist.

**Revendications pour les Etats contractants: BE, FR, DE, GR, SE, CH, GB**

1. Composition de chewing-gum en comprimés comprenant un mélange pressé de granulés
   (a) d'une base élastique pour chewing-gum; et
   (b) d'un système à libération contrôlée comprenant :
      (i) un ingrédient actif insolubilisé choisi parmi les agents aromatisants, les médicaments, les agents colorants, les agents édulcorants, les parfums, les charges et leurs mélanges; et
      (ii) une matrice d'alginate à cation multivalent ou de carraghénate à cation multivalent piégeant ledit ingrédient actif insolubilisé.

2. Composition selon la revendication 1, comprenant en outre un édulcorant incorporé indépendamment du système à libération contrôlée.

3. Composition selon la revendication 1 ou 2, où la base élastique est constituée de polymères choisis parmi la gomme chicle, jelutong, gutta percha, sapotilla, les copolymères butadiène-styrène, les copolymères isobutylène-isoprène, le polyéthylène, le polyisobutylène, le polyvinylacétate et leurs mélanges.

4. Composition selon la revendication 1, 2 ou 3, où l'ingrédient actif insolubilisé est une essence aromatisante choisie parmi l'essence de menthe poivrée, l'essence de menthe verte, l'essence de cannelle, l'essence de wintergreen, les essences d'agrumes, les essences de fruits, les extraits et leurs mélanges.

5. Composition de chewing-gum en comprimés comprenant un mélange pressé de granulés :
   (a) d'une base élastique de chewing-gum;
   (b) d'un premier aromatisant encapsulé dans un alginate ou un carraghénate ; et
   (c) d'un second ingrédient encapsulé dans une matrice hydrophile.

6. Composition selon la revendication 5, qui comprend en outre un édulcorant, incorporé indépendamment de l'aromatisant encapsulé dans l'alginate ou le carraghénate.

7. Composition selon la revendication 5 ou 6, où la base élastique de chewing-gum est constituée de polymères choisis parmi la gomme chicle, jelutong, gutta percha, sapotilla, les copolymères butadiène-styrène, les copolymères isobutylène-isoprène, le polyéthylène, le polyisobutylène, le polyvinylacétate et leurs mélanges.

8. Composition selon la revendication 5, 6 ou 7, où le premier aromatisant est une essence aromatisante choisie parmi l'essence de menthe poivrée, l'essence de menthe verte, l'essence de cannelle, l'essence de wintergreen, les essences d'agrumes, les essences de fruits, les extraits et leurs mélanges.

9. Composition selon l'une quelconque des revendications 5 à 8, où le second ingrédient est un second aromatisant encapsulé et où ledit chewing-gum en comprimés libère lesdits aromatisants d'une manière séquentielle.

10. Composition selon la revendication 9, où le second aromatisant est du café séché par atomisation.

11. Composition selon la revendication 5, où le second ingrédient est un médicament.

12. Composition selon la revendication 11, où le médicament est le thymol.

13. Procédé pour fabriquer du chewing-gum en comprimés comprenant de :
   (a) préparer une composition de chewing-gum comprenant une base élastique ayant une teneur en eau de 2% à 5% en poids;
   (b) ajouter à la base élastique une essence aromatisante encapsulée, tout en maintenant la température de l'ensemble du mélange au-dessus du point de congélation de l'eau, l'agent d'encapsulation étant caractérisé en ce qu'il empêche l'essence aromatisante de solubiliser ou de plastifier la base élastique;
   (c) permettre au mélange de se solidifier;
   (d) transformer le mélange solidifié en granulés; et
   (e) presser les granulés obtenus en comprimés de chewing-gum.

14. Procédé selon la revendication 13, où la composition de chewing-gum préparée dans l'étape (a) comporte un édulcorant.

15. Procédé selon la revendication 13 ou 14, où la base élastique est constituée de polymères choisis parmi la gomme chicle, jelutong, gutta percha, sapotilla, les copolymères butadiène-styrène, les copolymères isobutylène-isoprène, le polyéthylène, le polyisobutylène, le polyvinylacétate et leurs mélanges.

16. Procédé selon la revendication 13, 14 ou 15, où l'essence aromatisante est choisie parmi l'essence de menthe poivrée, l'essence de menthe verte, l'essence de cannelle, l'essence de wintergreen, les essences d'agrumes, les essences de fruits, les extraits et leurs mélanges.

17. Procédé pour préparer du chewing-gum en comprimés comprenant de :
   (a) former un mélange comprenant une base élastique ayant une teneur en eau située entre 2% et 5% en poids, un premier aromatisant encapsulé dans de l'alginate ou dans du carraghénate et un second ingrédient encapsulé dans une matrice hydrophile, à une température au-dessus du point de congélation de l'eau;
   (b) permettre au mélange de se solidifier;
   (c) transformer le mélange solidifié en granulés; et
   (d) presser les granulés obtenus en comprimés de chewing-gum.

18. Procédé selon l'une quelconque des revendications 13 à 16, où l'agent d'encapsulation est une matrice réticulée d'un alginate à cation multivalent ou d'un carraghénate à cation multivalent.

**Revendications pour l'Etat contractant: ES**

1. Procédé de préparation d'un chewing-gum en comprimés comprenant de :
   (a) fournir une base élastique;
   (b) ajouter à la base élastique un système à libération contrôlée comprenant :
      (i) un ingrédient actif insolubilisé choisi parmi les agents aromatisants, les médicaments, les agents colorants, les agents édulcorants, les parfums, les agents de charge et leurs mélanges; et
      (ii) un agent d'encapsulation,
      tout en maintenant la température de l'ensemble du mélange au-dessus du point de congélation de l'eau, l'agent d'encapsulation étant caractérisé en ce qu'il empêche l'ingrédient actif de solubiliser ou de plastifier la base élastique;
   (c) permettre au mélange de se solidifier;
   (d) transformer le mélange solidifié en granulés; et
   (e) presser les granulés obtenus en comprimés de chewing-gum.

2. Procédé selon la revendication 1, où la base élastique comprend un édulcorant.

3. Procédé selon la revendication 1 ou 2, où la base élastique est constituée de polymères choisis parmi la gomme chicle, jelutong, gutta percha, sapotilla, les copolymères butadiène-styrène, les copolymères isobutylène-isoprène, le polyéthylène, le polyisobutylène, le polyvinylacétate et leurs mélanges.

4. Procédé selon la revendication 1, 2 ou 3, où la base élastique a une teneur en eau située entre 2% et 5% en poids.

5. Procédé selon l'une quelconque des revendications précédentes, où l'agent d'encapsulation est une matrice réticulée d'un alginate à cation multivalent ou d'un carraghénate à cation multivalent.

6. Procédé selon l'une quelconque des revendications qui précèdent, où l'essence aromatisante est choisie parmi l'essence de menthe poivrée, l'essence de menthe verte, l'essence de cannelle, l'essence de wintergreen, les essences d'agrumes, les essences de fruits, les extraits et leurs mélanges.

7. Procédé pour préparer du chewing-gum en comprimés comprenant de :
   (a) former un mélange comprenant une base élastique, un premier aromatisant encapsulé dans de l'alginate ou dans du carraghénate et un second ingrédient encapsulé dans une matrice hydrophile, à une température au-dessus du point de congélation de l'eau;
   (b) permettre au mélange de se solidifier;
   (c) transformer le mélange solidifié en granulés; et
   (d) presser les granulés obtenus en comprimés de chewing-gum.

8. Procédé selon la revendication 7, où le second ingrédient est un agent aromatisant et où le chewing-gum en comprimés libère les aromatisants d'une manière séquentielle.

9. Procédé selon la revendication 8, où le second agent aromatisant est du café soluble séché par atomisation.

10. Procédé selon la revendication 7, où le second ingrédient est un médicament.

11. Procédé selon la revendication 10, où le médicament est le thymol.